# EUROPÄISCHE PATENTSCHRIFT

(11) **EP 0 487 844 B1**
(45) Veröffentlichungstag und Bekanntmachung des Hinweises auf die Patenterteilung: **13.07.1994**
(21) Anmeldenummer: 91115036.5
(22) Anmeldetag: 06.09.1991
(51) Int. Cl.: B67D 5/378, F16L 37/56, F16L 37/36

(54) **Schnellverschluss-Kupplung für Betankungsvorrichtung mit Gasrückführung**
Quick-acting coupling for refuelling device with gas return line
Raccord rapide pour dispositif de ravitaillement en carburant avec récupération des vapeurs

(30) Priorität: 20.11.1990 DE 4036901
(43) Veröffentlichungstag der Anmeldung: 03.06.1992
(73) Patentinhaber: Carl Kurt Walther GmbH & Co. KG, D-42306 Wuppertal (DE)
(72) Erfinder:
(74) Vertreter: Rieder, Hans-Joachim, Dr.

(56) Entgegenhaltungen:
- DE-A- 3 831 467
- FR-A- 2 266 076
- US-A- 3 635 264
- US-A- 4 500 881
- US-A- 4 763 683

## Beschreibung

Die Erfindung bezieht sich auf eine Schnellverschluß-Kupplung mit in Kupplungsstellung zweier Kupplungshälften durch Handbetätigung auslösbarer Verriegelung, wobei benachbarten Durchlaßkanalquerschnitten, von denen der eine zum Flüssigkeitseinfüllen und der andere zum Luftaustritt aus dem sich füllenden Tank, vorzugsweise eines Kraftfahrzeuges, dient, und mit einem beide Durchlaßkanalquerschnitte der tankseitigen Kupplungshälfte verschließenden, abgefederten Verschlußventil, welches mittels einer Steuerhülse der einen Kupplungshälfte im Sinne der Freigabe betätigbar ist.

Schnellverschluß-Kupplungen haben im Hinblick auf problematische Medien von Hause aus den wesentlichen Vorteil der geringstmöglichen Leckverluste.

Im Betankungswesen ist es bekannt, zum Auffangen verflüchtigender Anteile dem üblichen Zapfhahnrohr einen Gummirüssel vorzuschalten. Die auf diesem Wege erfolgende Gasabführung ist mehr ein Behelf; nicht nur beim Ansetzen des Zapfhahns und dessen Ausheben aus dem Tankstutzen wird gasförmiges Medium an die Umwelt freigegeben, sondern häufig auch noch während des Tankprozesses, da der Rand des besagten Gummirüssels nicht einwandfrei dichtend aufliegt, dies zufolge der meist unterschiedlichen Beschaffenheit der jeweiligen Tankstutzenkontur etc.

Die in der Gattung aufgeführte Schnellverschluß-Kupplung ist durch die DE-A-3 831 467 bekannt. Sie ist im Rahmen einer Verbindungsanlage zur Zuführung von Substanzen von mehreren Abgabestationen zu mehreren Aufnahmestationen eingesetzt. Die dort in Figur 16 wiedergegebene Schnellverschluß-Kupplung besitzt gegenläufig nutzbare Durchlaßkanalquerschnitte. Die eine Kupplungshälfte ist mit einer Versorgungsleitung verbunden, die andere Kupplungshälfte sitzt im Stutzen eines Tanks. Letztere ist bezüglich beider Durchlaßkanalquerschnitte durch ein gemeinsames, in Richtung der Schließstellung abgefedertes Verschlußventil kontrolliert. Dieses wird im Zuge der Kupplung von einer als Stößel wirkenden Steuerhülse in die Öffnungsstellung verschoben, so daß der Medienfluß freigegeben wird. Die mit der Leitung verbundene Kupplungshälfte hat kein Verschlußventil. Der zentrale Durchflußquerschnitt ist für die Ausbringung der Substanz aus dem Tank vorgesehen, der benachbarte Durchlaßkanalquerschnitt dient zum Einführen von bespielsweise Dampf, um den Tankinhalt praktisch über ein Steigrohr in den Leitungsweg zu pressen. In entkuppeltem Zustand können in den Leitungsenden befindliche Restmengen auslaufen. Außerdem enthält diese Kupplung einen Näherungsinitiator, über den die vollzogene Kupplung in ein Meldesignal umgesetzt wird.

Aufgabe der Erfindung ist es, eine gattungsgemäße Schnellverschluß-Kupplung zu schaffen, über die eine einwandfreie Gasrückführung möglich ist, dies bei einfachem Aufbau einer solchen Kupplung.

Gelöst ist diese Aufgabe durch die im Anspruch 1 angegebene Erfindung.

Die Unteransprüche sind vorteilhafte Weiterbildungen des Erfindungsgegenstandes.

Zufolge solcher Ausgestaltung ist eine einwandfreie Betankungsweise erzielt. Weder die im Tank verdrängte Luft noch der verflüchtigende Anteil des Betankungsmediums wird schadbar an die Umwelt abgegeben. Einfüllen und Abführen geschieht über ein und dieselbe Kupplung, ohne daß dafür die übliche Form verlassende Anbauten erforderlich wären. Die Mittel sind einfach und zweckmäßig. Konkret ist dies alles dadurch erreicht, daß auch der einen Kupplungshälfte ein Verschlußventil zugeordnet ist, derart, daß beide Durchlaßkanalquerschnitte sich beim Trennen der Kupplungshälften gleichzeitig schließen, wozu die in einem Gehäuse der Kupplungshälfte verschiebbar gelagerte Steuerhülse an einem beiden Durchlaßkanalquerschnitten zugeordneten Dichtring dichtend anliegt und mit seitlichen, rückwärtigen Partien (Ventilsitzfläche und Mantelwand) den tankstutzenabgewandten Bereich beider Durchlaßkanalquerschnitte abdichtet. Dies alles in einem gemeinsamen Gehäuse unterzubringen und auch noch in Nachbarschaftslage, führt zu einer gedrungenen, durch den Benutzer ohne Schwierigkeiten beherrschbaren Bauform. Die Trennebene der Durchlaßkanalquerschnitte erfährt so eine von beiden Seiten derselben her wirkende, optimale, insgesamt allso völlig leckfreie Schließung. Unter Beibehaltung des vorteilhaften Grundprinzips gattungsgemäßer Kupplungen verläuft der Flüssigkeits-Durchlaßkanalquerschnitt zentral. Das dezentrale Umfeld ist dabei in bester Weise für den Rückweg bzw. für die Gasabführung erschlossen. Auch tankanschlußseitig sind vorteilhafte Lösungsmittel gefunden, die darin bestehen, daß der Luftaustritts-Durchlaßkanalquerschnitt fahrzeugseitig in einen Ringraum zwischen Anschlußstutzen und Füllrohr des Tanks einmündet. Ein solcher Ringraum eröffnet dabei in günstiger Weise die Möglichkeit einer Weiterbildung dahingehend, daß mehrere konzentrisch um den zentralen Durchlaßkanalquerschnitt gruppierte Luftaustritts-Durchlaßkanalquerschnitte vorgesehen werden. Die Gas/Luftabführung ergibt sich dadurch unter geringstem Zeitaufwand. Weiter wird eine vorteilhafte Ausgestaltung erzielt durch in Richtung der Schließgrundstellung federbelastete, leckfrei (clean break) arbeitende Verschlußventile, welche gemeinsam von einer Steuerhülse in Öffnungsrichtung betätigbar sind. Auch diesbezüglich erweist sich der genutzte zentral orientierte bzw. rotationssymmetrische Aufbau entsprechender SchnellverschlußKupplungen als sehr zweckdienlich. Dabei bildet die Steuerhülse nicht nur das entsprechende stößelartige Betätigungsorgan, sondern übernimmt auch noch eine weitergehende Funktion dergestalt, daß die Steuerhülse in der Ventilsperrebene als Scheidewand der Verschlußkanalquerschnitte fungiert. Die schieberartig betätigbare Steuerhülse gibt dabei zu keiner Zeit die Trennung der Durchlaßkanalquerschnitte voneinander auf. Benutzungstechnisch erweist es sich weiter als günstig, daß die Steuerhülse von einem beidseitig hilfsmedienbeaufschlagten Kolben verlagerbar ist. Weiter erweist es sich als günstig, daß die Steuerhülse ventilseitig einen verbreiterten Kopf bildet, der mit seiner freien Stirnfläche an dem Dichtring anliegt. Um die Federkraft der Verschlußventile zu nutzen, erweist es sich überdies als günstig, daß der Dichtring an einem Ringflansch des Verschlußventiles der tankstutzenseitigen Kupplungshälfte sitzt. Hierbei ist es günstig, daß den Randzonen des Dichtrings, die über die Stirnfläche überragend ausgebildet sind, konzentrische Ventilsitzflächen einer gemeinsamen Ringschleuse der Durchlaßkanalquerschnitte gegenüberliegen, welche Ringschleuse das dortige Ende der Steuerhülse aufnimmt. Weiter erweist es sich als vorteilhaft, daß dem als Ringkolben gestalteten Kolben im zugehörigen Zylinder des Gehäuses ein Näherungsinitiator zugeordnet ist. Dieser läßt sich in ein Datenübertragungssystem integrieren. Diesbezüglich liegt eine günstige weiterbildende Ausgestaltung, nach Anspruch 1 vor, und zwar dergestalt, daß beiderseits einer Trennfuge beider Kupplungshälften je eine in die Kupplungshälften-Gehäusestirnflächen eingelassene Induktionsspule benachbart liegt, welche die Durchlaßkanalquerschnitte ringförmig umgeben und von denen die eine als Sender mit einem im Tank angeordneten Geber und die andere als Empfänger mit einem Daten-Registriergerät verbunden ist. Über eine solche Einrichtung läßt sich die Zwangsreihenfolge von Kupplung und Medienfreigabe narrensicher steuern und auch der gesamte Betankungsvorgang sicher überwachen. Schließlich bringt die Erfindung noch den Vorschlag, daß die Anschlüsse für die Durchlaßkanalquerschnitte, die der Speisung der Kolben/Zylinder-Einheit und der für eine elektrische Leitung für Geber/Empfänger-Elemente im Rücken des Gehäuses der Schnellverschluß-Kupplung liegen und von einer Schutzkammer umgeben sind, die sich in einen sämtliche Leitungen gebündelt führenden Flexschlauch fortsetzt. Neben dem so erreichten Vollschutz ist auch die Gefahr eines Verhedderns, wie dies bei Doppelschläuchen oft zu beobachten ist, ausgeschlossen.

Der Gegenstand der Erfindung ist nachstehend anhand eines zeichnerisch veranschaulichten Ausführungsbeispieles näher erläutert. Es zeigt:

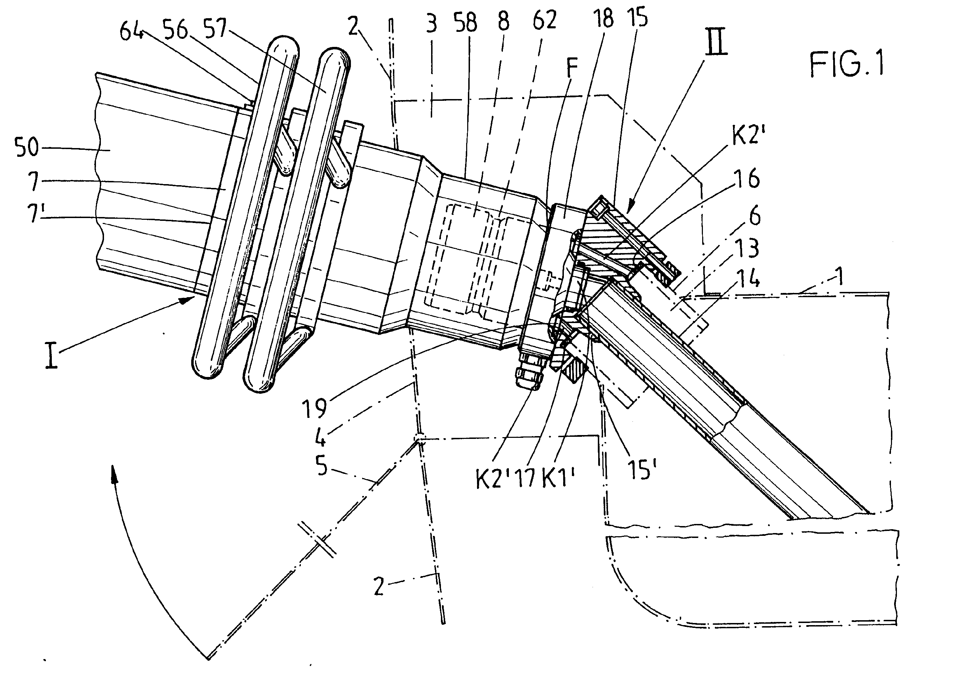

- Fig. 1: die Schnellverschluß-Kupplung als Betankungskupplung im Teilschnitt, den Tankstutzenbereich mit darstellend, gekuppelt,
- Fig. 2: die Schnellverschluß-Kupplung partiell im Halbschnitt, unter Mitdarstellung der Anschlüsse,
- Fig. 3: eine Herausvergrößerung im Bereich der Verschlußventile bei noch versperrten Durchlaßkanalquerschnitten,
- Fig. 4: eine der Fig. 2 entsprechende Darstellung in den Durchlaß freigebendem Zustand,
- Fig. 5: die entsprechende Herausvergrößerung im Bereich der Verschlußventile, die Öffnungsstellung derselben darstellend und
- Fig. 6: die Stirnansicht von rechts gegen den Rücken des Gehäuses der Schnellverschlußkupplung, die Verteilung der Anschlußstellen darstellend und
- Fig. 7: eine Herausvergrößerung im Bereich der Induktionsspulen.

Die in der Zeichnung wiedergegebene Schnellverschluß-Kupplung besteht aus einer praktisch einen Zapfhahn einer Treibstoffversorgungsstelle bildenden Kupplungshälfte I und einer an einem Tank 1 eines Kraftfahrzeugs 2 sitzenden anderen Kupplungshälfte II.

Vom Kraftfahrzeug 2, vorzugsweise einem Bus, ist lediglich die tankstutzenseitige Wandungskontur wiedergegeben einschließlich der Tankstutzenkammer 3, deren Öffnung 4 in üblicher Weise mit Hilfe einer Klappe 5 verschließbar ist.

In einer ecknahen Zone der Decke des Tanks 1 befindet sich ein in strichpunktierter Linienart dargestellter Tankanschlußstutzen 6. Mit dessen freiem Ende ist die Kupplungshälfte II verbunden, welche den fahrzeugseitigen Teil des in seiner Gesamtheit mit 7 bezeichneten Gehäuses der Schnellverschluß-Kupplung dargestellt.

Die Kupplungshälfte II trägt einen freistehenden Nippel 8. Dieser ist in dichtende, verriegelte Steckverbindung bringbar mit einer Muffe oder Büchse 9 der Kupplungshälfte I. Die Büchse 9 ist fest mit dem Gehäuse 7 verflanscht. Die flanschdurchgreifenden Befestigungsmittel tragen das Bezugszeichen 10.

Jede Kupplungshälfte I,II enthält ein leckfrei arbeitendes Verschlußventil. Das der Kupplungshälfte I ist mit V1 und das der Kupplungshälfte II mit V2 bezeichnet. Der Ventilkörper beider Verschlußventile steht in üblicher Weise unter Druckfederbelastung in Richtung der Schließstellung. Die Ventilfeder des Verschlußventils I ist mit 11 bezeichnet, die des anderen mit 12. Sie belasten die Verschlußventile V1,V2 gegeneinandergerichtet, ruhen also auf entsprechend weit beabstandet liegenden, ortsfesten Widerlagern des Gehäuses 7, und zwar auf Ringschultern derselben.

Die Schnellverschluß-Kupplung ist so aufgebaut, daß beim Betankungsvorgang die im Tank 1 verdrängte Luft und auch der vergasende Treibstoffanteil voll entsorgbar abgeführt werden können, und zwar via Schnellverschluß-Kupplung. Erreicht ist das durch im Gehäuse 7 benachbarte Durchlaßkanalquerschnitte K1 und K2.

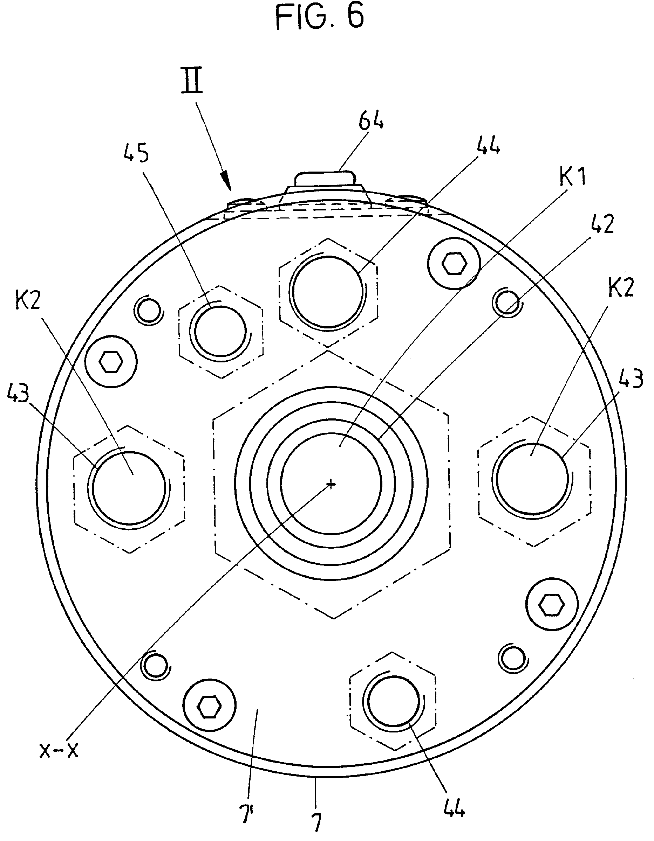

Der mit K1 bezeichnete Durchlaßkanalquerschnitt ist dem Flüssigkeitseinfüllen von bspw. Dieselkraftstoff vorbehalten. Er (K1) nimmt, außer im Querschnittsbereich der Verschlußventile V1, V2, einen zentralen Verlauf und bildet den größten Einzelquerschnitt dieser clean-break-Koaxialkupplung. Beide Durchlaßkanalquerschnitte werden anteilig von den beiden Kupplungshälften I, II gestellt. Der zum Luftaustritt aus dem sich füllenden Tank 1 vorgesehene Durchlaßkanalquerschnitt K2 ist in dem nicht durch den im wesentlichen zentralen Durchlaßkanalquerschnitt K1 besetzten Ringbereich untergebracht und dort gleich paarig vorgesehen (vgl. Fig. 6), und zwar durch diametral liegende Leitungszüge. Beim Trennen der Kupplungshälften I,II treten die Verschlußventile V1 , V2 gleichzeitig schlagartig in ihre Schließstellung und sperren beide Durchlaßkanalquerschnitte K1 bzw. K2 ihrer Kupplungshälfte I bzw. II an der Trennstelle leckfrei ab.

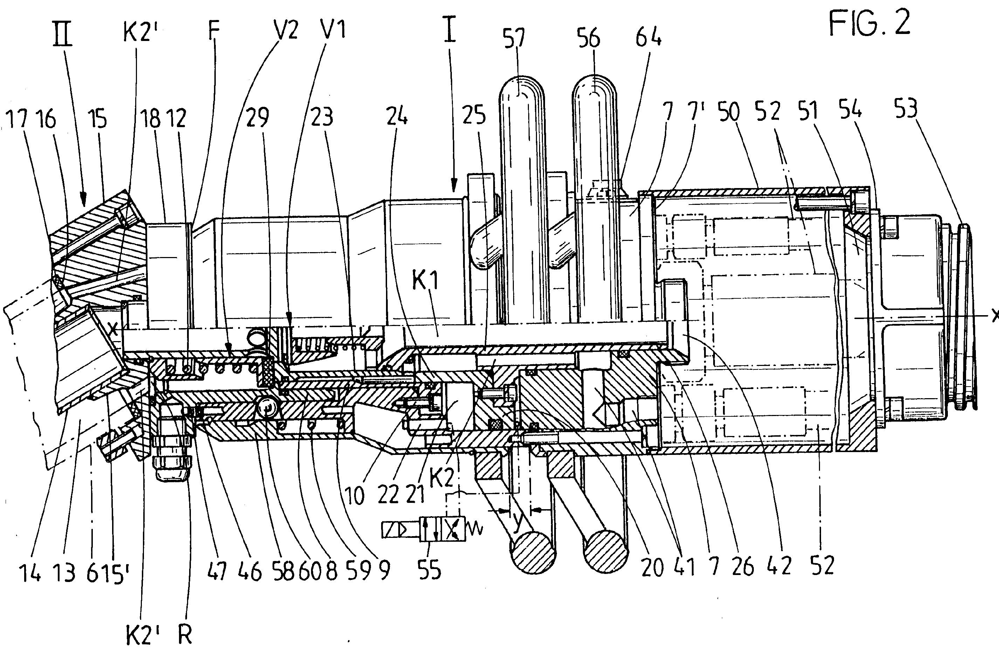

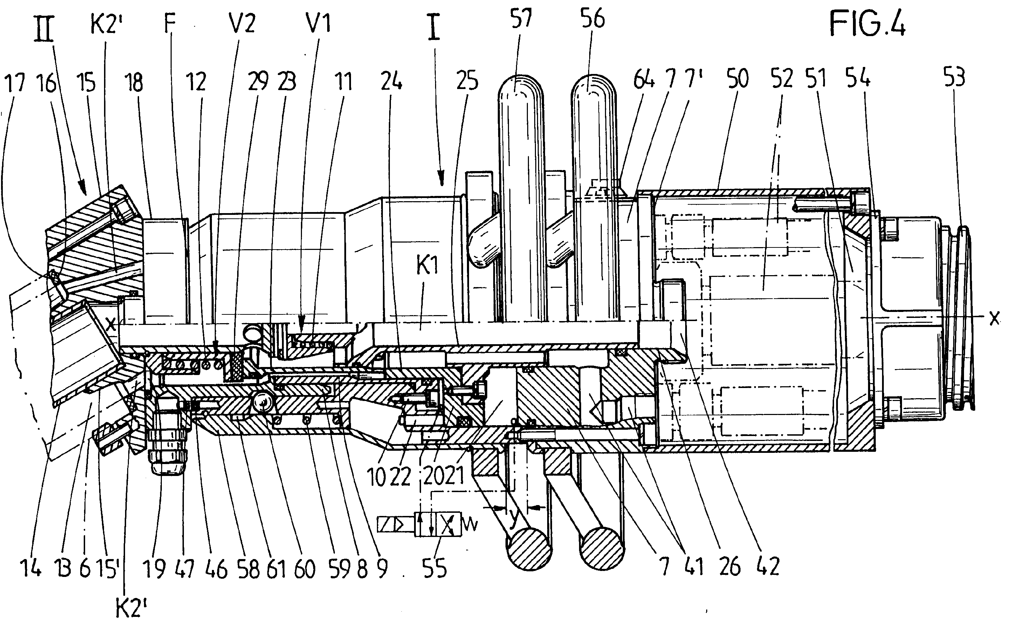

Wie den Zeichnungen, insbesondere Figuren 2 und 4 entnehmbar, münden die die Kupplungshälfte II passierenden Durchlaßkanalabschnitte K2′ fahrzeugseitig in einen Ringraum 13 zwischen Anschlußstutzen 6 und einem zentral gelegenen Füllrohr 14 des Tanks 1. Der unmittelbar stutzenseitig aufsitzende Basiskörper der Kupplungshälfte II ist mit 15 bezeichnet. Er besitzt eine stutzenseitige Ausdrehung 16 mit außenseitig der Kanalmündungen von K2′ liegendem Dichtungsring 17. An den zentral kanaldurchbrochenen Bereich des Basiskörpers 15 setzt eine vorragende Muffe 15′ an zur Festlegung des mit Abstand zum Boden des Tanks 1 verlaufenden Füllrohres 14. Ab dem Basiskörper 15 nehmen die beiden Leitungssysteme, sprich Durchlaßkanalquerschnitte K1 bzw. K2, einen stumpf abgewinkelten Verlauf - die Abschnitte K2′ und K1′ fallen ab - zur im wesentlichen horizontal ausgerichteten Kupplungshälfte I.

An den Basiskörper 15 schließt die zu einem Flansch 18 erbreiterte Zone des Nippels 8 an. Aufsatzseitig bildet der Flansch 18 eine ringförmige Verteilkammer 19 aus, in die der hier ringförmige Gesamtkanal des Durchlaßkanalquerschnitts K2 einmündet und von dem basisseitig dann die dortigen leicht divergierend ausgerichteten Durchlaßkanalabschnitte K2′ der Kupplungshälfte II ausgehen.

Die Betätigung der Verschlußventile V1,V2 erfolgt mittels eines Hilfsmediums, und zwar über einen von diesem beidseitig bzw. wechselseitig beaufschlagbaren ringförmigen Kolben 20. Letzterer führt sich in einem vom Gehäuse 7 gestellten Zylinder 21. Die Kolbenendstellungen sind anschlagbegrenzt. In der die Verschlußventile V1 und V2 freigebenden Lage befindet sich die tankstutzenseitige Fläche des ringförmigen Kolbens 20 vor einer Näherungsinitiator 22. Letzterer befindet sich in einer Axialbohrung des flanschförmigen Bereichs des Gehäuses 7 und steht mit einem Datenregistriergerät elektrisch in Verbindung.

Den unmittelbaren ventilseitigen Steuerangriff bildet eine als Stößel zu bezeichnende Steuerhülse 23. Diese ist mit der stutzenseitigen Stirnfläche eines zweiteilig gestalteten Kolbenschaftes 24 verbunden. Der zweite, den Kolbenschaft mitbildende, durch Flanschverbindung angesetzte Schaftteil heißt 25 und stellt mit seiner zentralen Bohrung anteilig den Durchlaßkanalquerschnitt K1. Der Gesamtschaft 24/25 führt sich allseitig abgedichtet in einer zentralen Bohrung 26 des Gehäuses 7 und bildet durch Radialbohrungen in seiner Wandung Abschnitte der Durchlaßkanalquerschnitte K2 außenseitig des zentralen Durchlaßkanalquerschnitts K1. Außerdem führt sich das einen Umlenkkanalabschnitt formende, stutzenseitige Ende des Schaftteils 25 an der Innenfläche des Fußes der erwähnten Steuerhülse 23, und zwar auch hier dieser gegenüber abgedichtet.

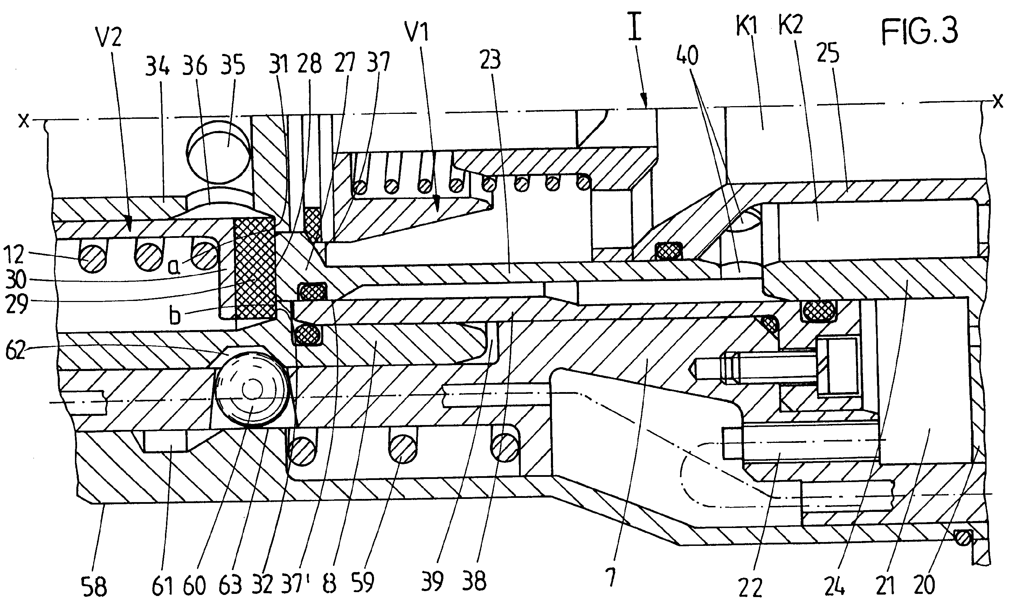

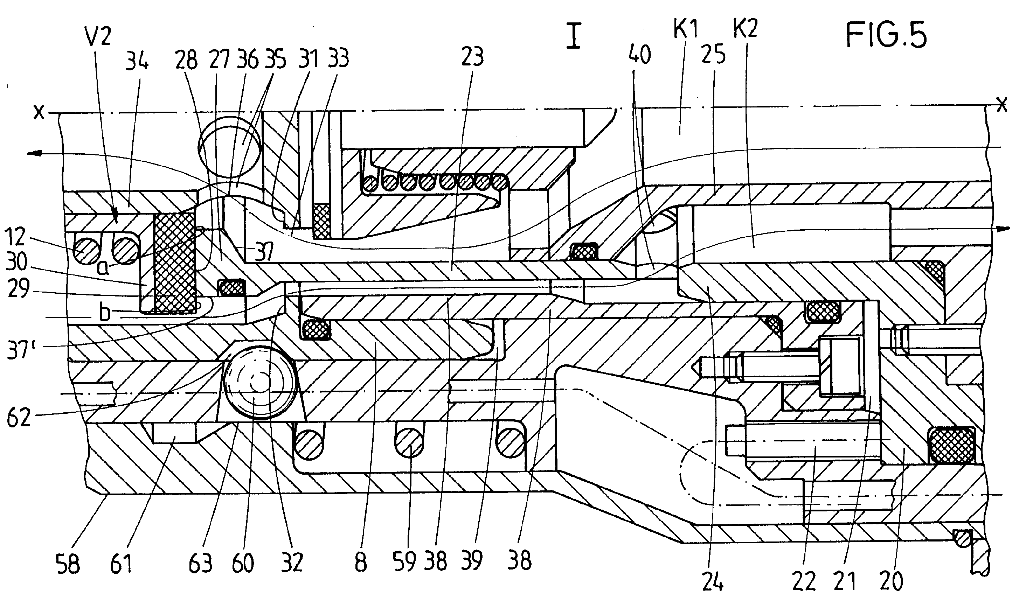

Ebenso stellt die Steuerhülse 23 mit ihrem Körper im Bereich der Ventilsperrebene eine Art beweglicher Scheidewand der Durchlaßquerschnitte K1, K2 dar. Zur Erzielung einer entsprechenden kanaltrennenden Schleusenfunktion plus Ventilbetätigung in der Ventilsperrebene bildet das ventilseitige bzw. tankstutzenseitige Ende der Steuerhülse 23 einen verbreiterten Kopf 27 aus (vgl. insbesondere Figuren 3 und 5). Letzterer liegt mit seiner freien Stirnfläche 28 dichtend an einem Dichtring 29 des Verschlußventils V2 an. Dieses Ventil, respektive sein Dichtring 29 schließt in der in Figur 3 gezeigten Verschlußstellung, aber auch in der Trennstellung beide Durchlaßkanalquerschnitte K1 und K2 ab. Besagter Dichtring 29 hat einen lang rechteckigen Querschnitt und sitzt mit seiner einen Breitfläche satt an einem Ringflansch 30 des Verschlußventils V2 dieser tankstutzenseitigen Kupplungshälfte II. Konkret ist es so, daß die beiden kolbenseitigen Randzonen a,b des Dichtringes 29, welche Randzonen über die Ringbreite der Stirnfläche 28 überstehen, gegen korrespondierende Ventilsitzflächen 31 bzw. 32 treten. Letztere liegen konzentrisch und erstrecken sich auf einer gemeinsamen Querebene zur Längsmittelachse x-x der Koaxialkupplung. Im Bereich dieser Querebene bildet das Gehäuse 7 eine den Kopf 27 und das dortige Ende der Steuerhülse 23 aufnehmende Ringschleuse 33.

Wie ersichtlich, ist die Ventilsitzfläche 31 von einem dem Verschlußventil V2 zugehörigen zentralen, mit dem Nippel 8 verbundenen Ventilstößel 34 gebildet. Der Ventilstößel 34 ist zur anteiligen Bildung des dem Flüssigkeitseinfüllen vorbehaltenen Durchlaßkanalquerschnitts K1 herangezogen und folglich hohl gestaltet, wobei jedoch sein kolbenseitiges Ende verschlossen ist. Unmittelbar hinter der dortigen Schließwand befinden sich Querdurchlässe 35. Der umgebenden Mantelzone der Querdurchlässe 35 ist eine ringnutartige Vertiefung 36 vorgeschaltet.

Weiter tritt der Kopf 27 mit seitlichen, rückwärtigen Partien in dichtende Anlage zum zentralliegenden Verschlußventil V1 der Kupplungshälfte I, das in der Schließstellung und Trennstellung der Kupplung. Die eine Partie bildet eine kopfseitige Ventilsitzfläche 37, gegen welche die dichtringbelegte Randkante des entsprechend federbelasteten Ventilkörpers des Verschlußventils V1 tritt. Diese praktisch vom Kinn des Kopfes 27 geformte, bewegliche Ventilsitzfläche 37 ist als rotationssymmetrische Schrägflanke ausgebildet mit tankstutzenseitig gerichteten Zentrierung. Im Rücken dieser Ventilsitzfläche 37 nimmt der Kopf 27 mantelwandseitig in einer Ringnut einen Dichtring auf, welcher den peripheren Abschnitt des Durchlaßkanalquerschnittes K2 gegenüber einer gehäuseseitig angeflanschten Innenhülse 38 abdichtet, also bei Trennung schließt. Zur Bildung dieses Abschnitts des Durchlaßkanalquerschnitts K2 ist die Steuerhülse kopfabgewandt außen abgesetzt.

Zwischen dem ventilverschlußseitigen Ende der Innenhülse 38 des Gehäuses 7 und der innenseitig ausgedrehten Endzone des Gehäuses 7 ist ein Ringschacht 39 belassen, in welchen der Nippel 8 im Zuge der Kupplungsverbindung abgedichtet einfährt.

Den Übertritt des Durchlaßquerschnitts K2 im Bereich des Kolbenschaftes 24 bringen im Fußbereich der Steuerhülse 23 belassene Querdurchlässe 40 im Rücken der dortigen Ausstülpung des Schaftteils 25.

Die anschlußseitige Fortsetzung dieses Kanalabschnitts in Anschlußrichtung, welche im Rücken der Schnellverschluß-Kupplung liegt, bilden Winkelkanäle 41 im dickwandigeren Bereich des Gehäuses 7.

Ein Blick auf Fig. 6 verdeutlicht die Verteilung der einzelnen Anschlüsse im Rücken F′ des Gehäuses 7. Es sind dies ein zentralliegender Anschluß 42 zum Flüssigkeitsbefüllen, also für den Durchlaßkanalquerschnitt K1, zwei Anschlüsse 43 für die Gas/Luftabführung und zwei Anschlüsse 44 zur Speisung der Kolben/Zylinder-Einheit 20/21 mit dem besagten Hilfsmedium und noch ein dezentralen Anschluß 45 für elektrische Leitungen. In allen Fällen kann es sich um Schraubstutzen handeln, denen Überwurfringmuttern der entsprechenden Leitungszüge zugeordnet werden.

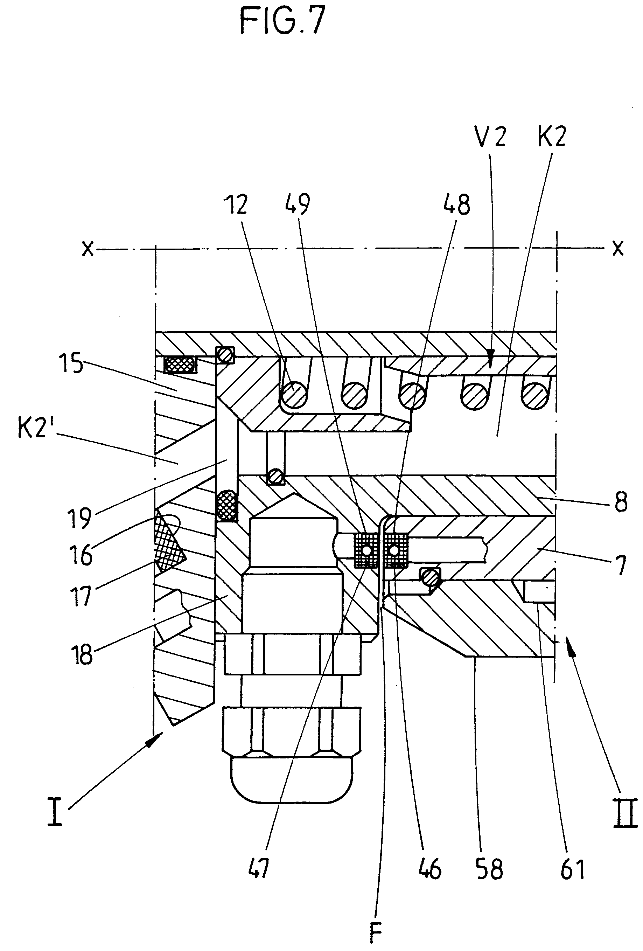

Im letztgenannten Zusammenhang ist baulich eine Vorkehrung dahingehend getroffen, daß beiderseits des peripheren Abschnitts einer Trennfuge F (vgl. Figur 7) beider Kupplungshälften I,II je eine Induktionsspule sitzt. Die eine ist mit 46 und die andere mit 47 bezeichnet. Sie erstrecken sich Rücken an Rücken und sind in korrespondierende Ringnuten 48 des Gehäuses 7 einerseits und 49 des Nippels 8 andererseits eingelassen. Hier ist die günstige kongruente Lage der gegeneinander gerichteten Gehäusestirnflächen als Informationsbrücke sinnvoll genutzt. Wie ersichtlich, umgeben die Induktionsspulen 46,47 die erläuterten Durchlaßkanalquerschnitte K1,K2. Die eine 47 der beiden Induktionsspulen 46,47 ist als Sender mit einem im Tank 1 angeordneten, nicht dargestellten Geber verbunden. Die andere der beiden Induktionsspulen 46,47 schließt an einen Empfänger an, der seinerseits fit einem nicht dargestellten Daten-Registriergerät in Verbindung steht. Auf diese Weise lassen sich die betankungsüblichen Informationen und Werte anzeigen und steuerungstechnisch nutzen.

Die erwähnten Anschlüsse 42 bis 45 sind von einer Schutzkammerwandung 50 umgeben. Letztere steht in lösbarer Verbindung zum Rücken 7′ des Gehäuses 7. Der rückenabgewandte Berech verengt sich zu einer Durchführöffnung 51 für die in ihrer Gesamtheit mit 52 bezeichneten Leitungen. In günstiger Weise sind diese Leitungen 52 in einem sogenannten Flexschlauch 53 gebündelt und geschützt untergebracht. Das befestigungsseitige Ende des Schlauches 53 trägt einen Flansch 54, welcher in lösbarer Verbindung zur Schutzkammerwandung 50 steht.

Eine den programmgesteuerten bzw. ablaufgesteuerten Verschiebevorgang des Kolbens 20 bewirkende Steuereinheit 55 ist nur schematisch dargestellt, ebenso die von ihr ausgehenden, den Kolben wechselseitig beaufschlagenden Leitungen nebst deren Anschlüsse.

Die handbetätigbare Schnellverschluß-Kupplung besitzt einen gehäuseverbundenen Greifring 56. Vor diesem Greifring, mit Freigang vorgelagert, erstreckt sich ein zweiter Greifring 57. Letzterer steht mit einer Verriegelungshülse 58 in Verbindung. Diese ist in Richtung ihrer Verriegelungsstellung federbelastet. Es handelt sich um eine gehäuseseitig abgestützte Druckfeder 59. Als Verriegelungselemente dienen Verriegelungskugeln 60, welche unverlierbar in Radialbohrungen eines gehäuseseitigen Kugelkäfigs liegen. Die Verriegelungskugeln 60 befinden sich in der Entkupplungsstellung in einer Ausweichlage, d.h. sie treten in eine mit Aussteuerflächen versehene Ringnut 61 der Verriegelungshülse 60 ein. In vorgesteuerter Lage der Verriegelungshülse 60 hebt eine Steuerschräge die Verriegelungskugeln 60 so weit an, daß sie sperrend in eine entsprechend liegende Ringnut 62 an der Mantelfläche des Nippels 8 einrücken. Die verriegelungshülsenseitige Sperrflanke trägt das Bezugszeichen 63.

Die Funktion ist, kurz zusammengefaßt wie folgt: Zum Kuppeln wird die Verriegelungshülse 58 entgegen der Kraft der sie permanent belastenden Druckfeder 59 unter Durchlaufen des vorgegebenen Verlagerungshubs y zurückgezogen. Es folgt das Aufstecken der Kupplungshälfte I auf die Kupplungshälfte II, wobei in der vorschriftsmäßigen Endstellung die Verriegelungskugeln 60 in die nippelseitige Ringnut 62 eingreifen. Durch Loslassen schiebt sich die Verriegelungshülse 58 dann vor. Die Verriegelungskugeln sind gesperrt. Die Schleifen der Induktionsspulen 46,47 sind einander genähert. Die vorschriftsmäßig vollzogene Sperrstellung geht als Information an das DatenRegistriergerät. Danach wird der Weg für die Betätigung des Kolbens 20 freigegeben. Dessen stutzenseitige, hilfsmediumveranlaßte Verlagerung verschiebt die kolbenverbundene Sperrhülse 23. Im Bereich der Ringschleuse 33 werden beide Durchlaßkanalquerschnitte K1,K2 geöffnet. Über den Durchlaßkanalquerschnitt K1 und den Durchlaßkanalabhschnitt K1′ geschieht das Flüssigkeitseinfüllen. Im Gegenzug wird die im Tank 1 verdrängte Luft etc. gegenläufig über die paarig angeordneten Durchlaßkanalabschnitte K2′ und Durchlaßkanalquerschnitte K2 entsorgungsgerecht evakuiert. Erfolgt über die Geber/Empfänger-Elemente die Information "Tank voll" wird programmgesteuert das Hilfsmedium auf Gegenlauf gestellt. Es erfolgt also das Zurückziehen des Kolbens 20.

Wird die Betankung willkürlich unter Ziehen via Greifring 57 unterbrochen, geht die entsprechende Information "Fugentrennung" an das Daten-Registriergerät, welches den Kolben 20 sofort verlagert, so daß die Durchlaßkanalquerschnitte K1,K2 sich gleichzeitig und spontan schließen.

Als zusätzliche Notsicherung ist der Schnellverschluß-Kupplung im Schutz des gehäuseseitigen Greifringes 56 liegend ein drucktastenbetätigbarer Notschalter 64 zugeordnet.

## Patentansprüche

1. Schnellverschluß-Kupplung mit in Kupplungsstellung zweier Kupplungshälften (I, II) durch Handbetätigung auslösbarer Verriegelung (Verriegelungshülse 58), zwei benachbarten Durchlaßkanalquerschnitten (K1, K2), von denen der eine (K1) zum Flüssigkeitseinfüllen und der andere (K2) zum Luftaustritt aus dem sich füllenden Tank (1), vorzugsweise eines Kraftfahrzeuges (2), dient, und mit einem beide Durchlaßkanalquerschnitte der tankseitigen Kupplungshälfte (II) verschließenden, abgefederten Verschlußventil (V2), welches mittels einer Steuerhülse (23) der einen Kupplungshälfte (I) im Sinne der Freigabe betätigbar ist, dadurch gekennzeichnet, daß auch der einen Kupplungshälfte (I) ein Verschlußventil (V1) zugeordnet ist, derart, daß beide Durchlaßkanalquerschnitte (K1, K2) sich beim Trennen der Kupplungshälften (I, II) gleichzeitig schließen, wozu die in einem Gehäuse (7) der Kupplungshälfte (I) verschiebbar gelagerte Steuerhülse (23) ventilseitig einen verbreiterten Kopf (27) bildet, der mit seiner freien Stirnfläche (28) an einem beiden Durchlaßkanalquerschnitten (K1, K2) zugeordneten Dichtring (29) dichtend anliegt und mit seitlichen, rückwärtigen Partien (Ventilsitzfläche 37 und Mantelwand) den tankstutzenabgewandten Bereich beider Durchlaßkanalquerschnitte (K1, K2) abdichtet.

2. Schnellverschluß-Kupplung nach Anspruch 1, dadurch gekennzeichnet, daß der Flüssigkeits-Durchlaßkanalquerschnitt (K1) zentral verläuft.

3. Schnellverschluß-Kupplung nach einem oder mehreren der vorhergehenden Ansprüche, dadurch gekennzeichnet, daß der Luftaustritts-Durchlaßkanalquerschnitt (K2) fahrzeugseitig in einen Ringraum (13) zwischen Anschlußstutzen (6) und Füllrohr (14) des Tankes (1) einmündet.

4. Schnellverschluß-Kupplung nach einem oder mehreren der vorhergehenden Ansprüche, gekennzeichnet durch in Richtung der Schließgrundstellung federbelastete, leckfrei (clean-break) arbeitende Verschlußventile (V1,V2), welche von einer Steuerhülse (23) gemeinsam in Öffnungsrichtung betägigbar sind**.**

5. Schnellverschluß-Kupplung nach einem oder mehreren der vorhergehenden Ansprüche, dadurch gekennzeichnet, daß die Steuerhülse (23) in der Ventilsperrebene als Scheidewand der Durchlaßkanalquerschnitte (K1,K2) fungiert.

6. Schnellverschluß-Kupplung nach einem oder mehreren der vorhergehenden Ansprüche, dadurch gekennzeichnet, daß die Steuerhülse (23) von einem wechselweise beidseitig hilfsmedien-beaufschlagten Kolben (20) verlagerbar ist.

7. Schnellverschluß-Kupplung nach einem oder mehreren der vorhergehenden Ansprüche, dadurch gekennzeichnet, daß der Dichtring (29) an einem Ringflansch (30) des Verschlußventils (V2) der tankstutzenseitigen Kupplungshälfte (II) sitzt.

8. Schnellverschluß-Kupplung nach einem oder mehreren der vorhergehenden Ansprüche, dadurch gekennzeichnet, daß den Randzonen (a,b) des Dichtringes (29), die über die Stirnfläche (28) überragend ausgebildet sind, konzentrische Ventilsitzflächen (31,32) einer gemeinsamen Ringschleuse (33) der Durchlaßkanalquerschnitte (K1,K2) gegenüberliegen, welche Ringschleuse (33) das dortige Ende der Steuerhülse (23) geführt aufnimmt.

9. Schnellverschluß-Kupplung nach einem oder mehreren der vorhergehenden Ansprüche, dadurch gekennzeichnet, daß dem als Ringkolben gestalteten Kolben (20) im zugehörigen Zylinder (21) des Gehäuses (7) ein Näherungsinitiator (22) zugeordnet ist.

10. Schnellverschluß-Kupplung nach Anspruch 1, dadurch gekennzeichnet, daß beiderseits einer Trennfuge (F) beider Kupplungshälften (I,II) je eine in die Gehäusestirnflächen eingelassene Induktionsspule (46,47) benachbart liegt, welche die Durchlaßkanalquerschnitte (K1,K2) ringförmig umgeben, und von denen die eine als Sender mit einem im Tank (1) angeordneten Geber und die andere als Empfänger mit einem Daten-Registriergerät verbunden ist.

11. Schnellverschluß-Kupplung nach einem oder mehreren der vorhergehenden Ansprüche, dadurch gekennzeichnet, daß Anschlüsse (42,43) für die Durchlaßkanalquerschnitte (K1,K2), Anschlüsse (44) für die Speisung der Kolben/Zylinder-Einheit (20/21) und ein Anschluß (45) für eine elektrische Leitung für Geber/Empfänger-Elemente im Rücken (7′) des Gehäuses (7) der Schnellverschluß-Kupplung liegen und von einer Schutzkammerwandung (50) umgeben sind, die sich in einen sämtliche Leitungen (52) gebündelt führenden Flexschlauch (53) fortsetzt.

## Claims

1. Quick-action coupling with a locking device (locking sleeve 58) which can be released by manual operation in the coupling position of two coupling halves (I, II), two adjacent throughflow channel profiles (K1, K2), one (K1) of which serves for liquid filling and the other (K2) for air escape from the tank (1) being filled, preferably of a motor vehicle (2), and with a sprung closure valve (V2) which closes the two throughflow channel profiles of the coupling half (II) on the tank side and which can be operated in the direction of release by means of a control sleeve (23) of one coupling half (I), characterised in that a closure valve (V1) is also associated with the first coupling half (I), in such a way that the two throughflow channel profiles (K1, K2) close simultaneously on separation of the coupling halves (I, II), for which the control sleeve (23), which is mounted slidably in a housing (7) of the coupling half (I), forms on the valve side a wider head (27) which with its free end face (28) abuts sealingly against a sealing ring (29) associated with both throughflow channel profiles (K1, K2) and with lateral rear sections (valve seat surface 37 and peripheral wall) seals the region of the two throughflow channel profiles (K1, K2) facing away from the tank neck.

2. Quick-action coupling according to claim 1, characterised in that the liquid throughflow channel profile (K1) extends centrally.

3. Quick-action coupling according to one or more of the preceding claims, characterised in that the air outlet throughflow channel profile (K2) leads on the vehicle side into a ring chamber (13) between the neck (6) and the filler pipe (14) of the tank (1).

4. Quick-action coupling according to one or more of the preceding claims, characterised by closure valves (V1, V2) which operate without leakage (clean break) and which are spring-loaded in the direction of the main closed position and which can be operated jointly by a control sleeve (23) in the direction of opening.

5. Quick-action coupling according to one or more of the preceding claims, characterised in that the control sleeve (23) in the valve closing plane acts as a partition between the throughflow channel profiles (K1, K2).

6. Quick-action coupling according to one or more of the preceding claims, characterised in that the control sleeve (23) is displaceable by a piston (20) subjected to auxiliary media on both sides alternately.

7. Quick-action coupling according to one or more of the preceding claims, characterised in that the sealing ring (29) fits on a ring flange (30) of the closure valve (V2) of the coupling half (II) on the tank neck side.

8. Quick-action coupling according to one or more of the preceding claims, characterised in that opposite the edge zones (a, b) of the sealing ring (29), which are designed to protrude beyond the end face (28), are concentric valve seat surfaces (31, 32) of a common ring sluice (33) of the throughflow channel profiles (K1, K2), which ring sluice (33) receives that end of the control sleeve (23).

9. Quick-action coupling according to one or more of the preceding claims, characterised in that a proximity initiator (22) is associated with the piston (20) designed as a ring piston in the appropriate cylinder (21) of the housing (7).

10. Quick-action coupling according to one or more of the preceding claims, characterised in that on either side of a joint (F) between the two coupling halves (I, II) is adjacently located an induction coil (46, 47), which coils are embedded in the housing end faces and surround the throughflow channel profiles (K1, K2) in a ring and of which one is connected as a transmitter to a transmitting device arranged in the tank (1) and the other is connected as a receiver to a data recording device.

11. Quick-action coupling according to one or more of the preceding claims, characterised in that connections (42, 43) for the throughflow channel profiles (K1, K2), connections (44) for supply of the piston and cylinder unit (20/21) and a connection (45) for an electrical wire for transmitter/receiver elements are located in the rear (7′) of the housing (7) of the quick-action coupling and surrounded by a protective chamber wall (50) which continues into a flexible hose (53) which conducts all pipes and wires (52) in a bundle.

## Revendications

1. Accouplement à fermeture rapide comportant en situation d'accouplement deux demi-accouplements (I, II) à déverrouillage manuel (manchon de verrouillage 58), deux conduits de passage adjacents (K1, K2) servant, l'un (K1) à l'arrivée du liquide et l'autre (K2) à la sortie de l'air hors du réservoir en cours de remplissage, de préférence celui d'un véhicule automobile (2) ainsi qu'une vanne d'obturation (V2) sollicitée élastiquement et qui obture les deux conduits de passage du demi-accouplement (II) du côté réservoir, et qui est susceptible d'être actionné, dans le sens du déverrouillage, au moyen d'un manchon de commande (23) de l'un des demi-accouplements (I), caractérisé en ce que le demi-accouplement (I) est également équipé d'une vanne d'obturation (V1) de telle sorte les deux conduits de passage (K1, K2) soient simultanément fermés lors de la séparation des demi-accouplements (I, II), tandis que le manchon de commande (23) monté coulissant dans un logement (7) du demi-accouplement présente, du côté vanne, une tête élargie (27), qui est en appui par sa face frontale libre (28) repose de manière étanche sur une bague d'étanchéité (29) disposée sur l'un des deux conduits de passage (K1, K2), et qui par des parties latérales dirigées vers l'arrière (surface d'obturation de vanne 37 et paroi d'enveloppe) rend étanche la zone, opposée au raccord de réservoir, des deux conduits de passage (K1, K2).

2. Accouplement à fermeture rapide selon la revendication 1, caractérisé en ce que le conduit de passage de liquide (K1) est disposé en position centrale.

3. Accouplement à fermeture rapide selon une ou plusieurs des revendications précédentes, caractérisé en ce que le conduit de passage de sortie d'air (K2) débouche du côté du véhicule dans un espace annulaire (13) entre l'embout de raccordement (6) et le tuyau de remplissage (14) du réservoir (1).

4. Accouplement à fermeture rapide selon l'une ou plusieurs des revendications précédentes, caractérisé par des vannes d'obturation (V1, V2) sollicitées élastiquement en direction de la position de base fermée, fonctionnant sans fuite (clean-break), et qui sont susceptibles d'être actionnées simultanément dans le sens de l'ouverture par un manchon de commande (23).

5. Accouplement à fermeture rapide selon une ou plusieurs des revendications précédentes, caractérisé en ce que le manchon de verrouillage (23) remplit, dans le plan d'obturation de la vanne, la fonction de cloison de séparation des conduits de passage (K1, K2).

6. Accouplement à fermeture rapide selon une ou plusieurs des revendications précédentes, caractérisé en ce que le manchon de verrouillage (23) est susceptible d'être déplacé par un piston (20) actionné alternativement sur chacune de ses deux faces par un fluide auxiliaire.

7. Accouplement à fermeture rapide selon une ou plusieurs des revendications précédentes, caractérisé en ce que la bague d'étanchéité (29) repose sur une collerette annulaire (30) de la vanne d'obturation (V2) du demi-accouplement (II) de l'embout du réservoir.

8. Accouplement à fermeture rapide selon une ou plusieurs des revendications précédentes, caractérisé en ce que les régions périphériques (a, b) de la bague d'étanchéité (29) qui sont en saillie sur la face frontale (28), font face à des portées de siège (31, 32) d'un passage annulaire (33) commun aux conduits de passage (K1, K2), ce canal annulaire (33) recevant et guidant l'extrémité locale du manchon de verrouillage (23).

9. Accouplement à fermeture rapide selon une ou plusieurs des revendications précédentes, caractérisé en ce que le piston (20) réalisé sous la forme d'un piston annulaire, est monté dans le cylindre correspondant (21) du boîtier (7) d'un capteur de proximité (22).

10. Accouplement à fermeture rapide selon la revendication 1, caractérisé en ce que de chaque côté d'une fente (F) séparant les deux demi-accouplements (I, II) et adjacentes à celle-ci, sont respectivement disposées deux bobines d'induction (46, 47) encastrées dans la face frontale du boîtier et entourent annulairement les conduits de passage (K1, K2) et qui sont reliées, l'une comme émetteur à un capteur placé dans le réservoir (1), l'autre comme récepteur à un appareil enregistreur de données.

11. Accouplement à fermeture rapide selon l'une ou plusieurs des revendications précédentes, caractérisé en ce que des raccords (42, 43) pour les conduits de passage (K1, K2), des raccords (44) pour l'alimentation de l'unité piston-cylindre (20/21) et une connexion (45) pour un conducteur électrique destiné aux éléments emetteur-récepteur, sont disposés dans la partie arrière (7′) du boîtier (7) de l'accouplement à fermeture rapide et sont entourés par une enveloppe de protection (50), laquelle se prolonge par un tube souple (53) contenant toutes les canalisations (52) rassemblées en faisceau.
